# EUROPÄISCHE PATENTSCHRIFT

(11) **EP 1 215 382 B1**
(45) Veröffentlichungstag und Bekanntmachung des Hinweises auf die Patenterteilung: **22.08.2007**
(21) Anmeldenummer: 01128804.0
(22) Anmeldetag: 04.12.2001
(51) Int. Cl.: F02C 3/30

(54) **Verfahren zum Betrieb eines Vormischbrenners**
Method of operating a premix burner
Procédé de fonctionnement d'un brûleur à prémélange

(30) Priorität: 16.12.2000 DE 10062904; 20.04.2001 DE 10119526
(43) Veröffentlichungstag der Anmeldung: 19.06.2002
(73) Patentinhaber: Alstom Technology Ltd, 5400 Baden (CH)
(72) Erfinder: Hellat, Jaan, Dr., 5406 Baden-Rütihof (CH); Reiss, Frank, 79787 Lauchringen (DE); Schiessel, Pirmin, 5424 Unterehrendingen (CH)

(56) Entgegenhaltungen:
- EP-A- 0 314 112
- EP-A- 0 590 829
- WO-A-00/14451
- WO-A-99/46484
- DE-A- 19 520 292

## Beschreibung

### Technisches Gebiet

Die Erfindung betrifft ein Verfahren zum Betrieb eines Vormischbrenners.

### Stand der Technik

Die Verwendung von Vormischbrennern ist beim Betrieb von Feuerungsanlagen und insbesondere Gasturbinen weit verbreitet. Solche Vormischbrenner sind beispielsweise jeweils aus der EP 321 809, der EP 780 629, der WO 93/17279, oder der EP 945 677 bekanntgeworden. Diese Brenner sind zum Betrieb mit flüssigen wie mit gasförmigen Brennstoffen geeignet. Ein gemeinsames Merkmal der aus den zitierten Dokumenten bekanntgewordenen Brenner ist, dass Verbrennungsluft in einem Innenraum des Brenners mit einem Brennstoff möglichst weitgehend vermischt wird. Die Brennluft wird dabei häufig tangential in den Innenraum des Brenners eingebracht. Die so induzierte Wirbelströmung platzt beim Austritt aus der Brennermündung auf. Dieser sogenannte "Vortex Breakdown" generiert eine Rezirkulationszone, an der eine Flamme rein aerodynamisch stabilisiert werden kann, ohne thermisch empfindliche mechanische Flammenhalter anzubringen. Durch die Vormischung von Luft und Brennstoff können diese Brenner prinzipiell unter Vermeidung stöchiometrischer Zonen betrieben werden, was - wenigstens im Betrieb mit Gas - ohne weitere Massnahmen einen Betrieb mit sehr niedrigen Emissionswerten ermöglicht.

Beim Einsatz flüssiger Brennstoffe ist die Vormischung vergleichsweise unvollständig, so, dass in diesem Falle eigentlich eine Diffusionsflamme vorliegt. Im Folgenden werden derartige Brenner dennoch als Vormischbrenner bezeichnet, da sich dieser Begriff für die zitierten Brennerbauarten in der Fachwelt etabliert hat. Um auch hier vergleichbar niedrige Emissionswerte insbesondere in Bezug auf Stickoxidemissionen zu erzielen - es sind dies Werte vom weniger als 50ppm - werden Vormischbrenner beim Betrieb mit Flüssigbrennstoff häufig zusätzlich mit Dampf- oder Wassereinspritzung betrieben. Dabei wird ein inertes Medium in die Flamme eingebracht, was die Flammentemperatur senkt und somit die Stickoxidproduktion reduziert. Beim Einsatz in Gasturbinenbrennkammern und bei einer Einspritzung von Wasser liegt die eingespritzte Wassermenge etwa in der Grössenordnung der Brennstoffmenge; das Verhältnis Wassermenge zu Brennstoffmenge liegt grob im Bereich von 0,7 bis 2, um eine entsprechende Stickoxidreduktion zu erzielen. Die entsprechenden Betriebskonzepte werden in Messreihen eingestellt, und die Wassermenge beziehungsweise das Verhältnis von Wassermenge zu Brennstoffmenge wird in Abhängigkeit von Betriebszuständen der Maschine vorgegeben. Aus den zitierten Wassermengen resultiert bei einer solchen Fahrweise natürlich ein hoher Verbrauch an entsprechend aufbereitetem, demineralisiertem Wasser.

Gleichwohl lassen sich beispielsweise in einer Gasturbine, welche mit Vormischbrennern ausgestattet ist, auch im Betrieb ohne Wassereinspritzung Emissionswerte erzielen, die deutlich unter denen von Gasturbinen mit herkömmlichen Brennern bei sogenannter trockener Fahrweise, das heisst ohne gezielte Einbringung von Wasser zur Stickoxidreduktion, liegen. Speziell in ariden Gebieten, in denen entweder eine Infrastruktur für Gas nicht vorhanden ist oder Öl besonders leicht verfügbar ist, werden Gasturbinen mit Vormischbrennern, beispielsweise sogenannten EV- oder AEV- Brennern, im trockenen" Ölbetrieb gefahren, das heisst, auf die Stickoxidreduktion durch die Einspritzung von Wasser wird verzichtet.

Die hier für Öl getroffenen Aussagen gelten selbstverständlich auch für den Betrieb mit anderen Flüssigbrennstoffen.

Auch im Vormischbetrieb mit Gas werden die Brenner im allgemeinen trocken betrieben, wobei unter dem Trockenbetrieb der Brenner im Rahmen des vorliegenden Dokumentes zu verstehen ist, dass kein Wasser oder Dampf in grossen Mengen gezielt zur Stickoxidreduzierung in die Verbrennungszone eingebracht wird.

In der Praxis hat sich nunmehr gezeigt, dass bei dem grossen Betriebsbereich, wobei neben den stark variierenden Parametern Temperatur und Druck der Verbrennungsluft in erster Linie der thermische Leistungsumsatz eines Brenners und das Impulsverhältnis von Brennstoff und Luft, sowie das Verhältnis des axialen Impulses zum Drehimpuls der Brennerströmung zu nennen sind, Verbrennungsinstabilitäten auftreten, welche zu unerwünschten Verbrennungspulsationen führen können. Daneben verändert sich auch die Lage der Flamme. Wenn die Flamme zu nahe an der Brennermündung stabilisiert, kann dies zu Temperaturerhöhungen und einer damit verbundenen Lebensdauerverkürzung führen.

Aus der Druckschrift WO-A1-00/14451 ist ein Verfahren zum Betrieb eines Brenners und einer Brenneranordnung bekannt, bei denen die Brennstoffmenge über den Öffnungsgrad eines Stellgliedes abhängig von der gewählten Leistung des Brenners eingestellt wird, wobei der Öffnungsgrad anhand der Leistung berechnet und unmittelbar eingestellt wird. Als Brennstoff kann dabei ein Öl/Wasser-Gemisch verwendet werden. Das voreingestellte Gemischverhältnis wird durch den Öffnungsgrad des Stellgliedes jedoch nicht beeinflusst.

Aus der EP-A1-0 314 112 ist ein Brenner für eine Gasturbine bekannt, bei dem im Betrieb, gesteuert mittels einer Durchflusssteuerung, Wasserdampf oder Wasser zugesetzt wird. Für die Durchflussmenge des Wassers bzw. Wasserdampfs wird ein festes Verhältnis zur Durchflussmenge des Brennstoffs für die erste Brennerstufe gewählt, nach dem dann in Abhängigkeit von der aktuellen Brennstoffmenge die Wassermenge gesteuert wird.

Aus der WO-A1-99/46484 ist schliesslich ein hocheffizienter Brenner mit niedrigen Emissionswerten für einen hybriden Brayton-Kreisprozess bekannt, bei dem grosse Mengen Wasser eingedüst werden, um ein Dampf umfassendes Arbeitsmedium zu bilden. Wird das Verfahren zur Wasserentsalzung eingesetzt, wird beispielsweise eine Wassermenge mit dem 6- bis 12-fachen des Brennstoffgewichtes eingebracht.

### Darstellung der Erfindung

Aufgabe der Erfindung ist es, bei einem Verfahren der eingangs genannten Art die Nachteile des Standes der Technik zu vermeiden.

Erreicht wird dieses durch die Gesamtheit der Merkmale des Anspruchs 1.

Kern der Erfindung ist, in Abhängigkeit von wenigstens einer gemessenen Grösse ermittelten Leitgrösse eine Wassermenge gezielt einzubringen. Dies hat insbesondere den Effekt, den axialen Impuls der Brennerströmung gezielt und unabhängig von sonstigen Betriebsparametern wie der Brennstoffmenge zu variieren, und auf diese weise den Ort der Flammstabilisierung unabhängig in gewissen Grenzen verschieben zu können.

Unter dem Begriff der Leitgrösse ist im Rahmen dieser Erfindungsoffenbarung eine Grösse zu verstehen, in Abhängigkeit von der die einzubringende Wassermenge eingestellt wird.

Wird der Brenner trocken, das heisst ohne Wassereinspritzung zur Stickoxidminderung, betrieben, wird die eingebrachte Wassermenge so gering wie möglich gehalten, wenn immer möglich kleiner als 20% der Brennstoffmenge. Bevorzugt wird versucht, die Wassermenge auf weniger als 10%, insbesondere auf weniger als 5%, der Brennstoffmenge zu begrenzen.

Beim "nassen" Betrieb des Vormischbrenners, das heisst beim Betrieb mit Wassereinspritzung zur Stickoxidminderung, wird analog die verfahrensbedingte Variation der Wassermenge kleiner als 20% der Brennstoffmenge gehalten. Bevorzugt wird versucht, die verfahrensbedingte Variation der Wassermenge auf weniger als 10%, insbesondere auf weniger als 5%, der Brennstoffmenge zu begrenzen.

Das Verfahren ist vorteilhaft beim Betrieb des Brenners mit Flüssigbrennstoff einzusetzen.

In einer bevorzugten Ausführungsform der Erfindung ist wenigstens eine gemessene Grösse die Verbrennungspulsationen. Als Leitgrösse kann daraus beispielsweise ein Summenpegel gebildet werden, oder es kann eine Amplitudenspitze eines Frequenzspektrums der Pulsationen als Leitgrösse herangezogen werden. Weiterhin kann zur Bildung der Leitgrösse auch ein oder mehrere Frequenzbereiche des Spektrums der Verbrennungspulsationen verwendet werden.

In einer weiteren Vorzugsvariante wird wenigstens eine Temperatur gemessen, insbesondere eine Materialtemperatur des Vormischbrenners, um eine Leitgrösse zu bilden. Ebenso kann auch ein Signal eines optischen Sensors herangezogen werden. Hieraus liesse sich zum Beispiel ein Hinweis auf die Flammenposition gewinnen, welche als Leitgrösse verwendet würde.

Mit Vorteil kann die in einen Brenner eingebrachte Wassermengenverstellung in einem geschlossenen Regelkreis betrieben werden, um eine Leitgrösse auf einen Sollwert einzuregeln, in einem Sollintervall zu halten, oder auf einen oberen oder unteren Grenzwert zu begrenzen.

Die Wassermenge kann einerseits über Düsen des Brenners eingebracht werden; es ist weiterhin möglich, die Wassermenge vorgängig der Eindüsung eines Flüssigbrennstoffs in den Brennraum diesem zuzumischen, und so den Brenner mit einer Wasser-in-Brennstoff-Emulsion zu betreiben.

Die Wassermenge kann entweder einfach in Abhängigkeit von der Leitgrösse gesteuert werden. Andererseits kann die Wassermenge auch in einem geschlossenen Regelkreis mit der Leitgrösse als Regelgrösse betrieben werden, um beispielsweise Pulsationen oder Materialtemperaturen unter einem oberen Grenzwert zu halten, oder um einen Sollwert der Flammenposition anzufahren.

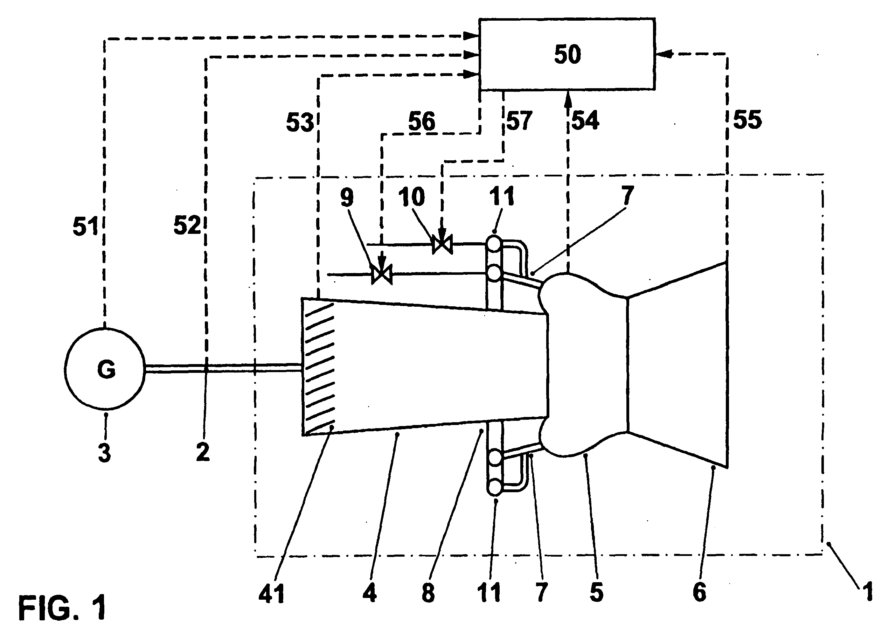

Die Erfindung wird nachfolgend in Ausführungsbeispielen anhand der Zeichnung näher erläutert.

### Kurze Beschreibung der Zeichnung

Die einzige Figur zeigt eine einfache Gasturbinenanlage, welche zur Durchführung des erfindungsgemässen Verfahrens vorbereitet ist.

### Weg zur Ausführung der Erfindung

Die einzige Figur zeigt in einer stark schematisierten Darstellung einen einfachen Gasturbosatz 1, welche aus einem Verdichter 4, einer Brennkammer 5, und einer Turbine 6 besteht. Der Gasturbosatz treibt über eine Welle 2 einen Generator 3 an. Selbstverständlich könnte der Gasturbosatz auch über mehrere hintereinander einwellig oder mehrwellig angeordnete Turbinen und/oder Teilverdichter verfügen. Ebenso könnte zwischen jeweils zwei Turbinen eine weitere Brennkammer oder zwischen Teilverdichtern ein Zwischenkühler angeordnet sein, ohne dass dies Einfluss auf den Grundgedanken der Erfindung hätte. Die als Ringbrennkammer ausgebildete Brennkammer 5 ist mit einer Anzahl am Umfang verteilter Vormischbrenner 7 versehen, von denen in der Darstellung nur die Brennerlanze zu sehen ist. Über die Brennerlanzen sind die Brenner mit einer oder mehreren Ringleitungen 8 verbunden, über die Betriebsmedien, insbesondere Brennstoff, zugeführt werden. Dabei kann einerseits ein Brenner über Anschlüsse an mehreren Zuleitungen verfügen, ebenso wie einzelne Ringleitungen selektiv einzelne Brennergruppen versorgen können. Die Leistung des Gasturbosatzes wir in erster Näherung durch die zugeführte Brennstoffmenge bestimmt. Eine verstellbare Vorleitreihe 41 des Verdichters dient dazu, über den gesamten abzudeckenden Lastbereich den Luftmassenstrom zu variieren. Die Gasturbinenanlage ist mit einer Vielzahl von Messstellen versehen, die im Betrieb die Überwachung der Betriebszustände und die Regelung des Gasturbosatzes ermöglicht. Die Messsignale laufen in einer zentralen Kontrollmodul 50 zusammen. In der Zeichnung sind exemplarisch Signalleitungen 51, 52, 53, 54, 55 dargestellt. Aus diesen Signalen werden im Kontrollmodul physikalische Grössen berechnet, und aus diesen Leitgrössen zur Steuerung des Gasturbosatzes gebildet. In der Figur ist exemplarisch eine Signalleitung 56 vom Kontrollmodul 50 zu einem Brennstoffmengen-Stellorgan 9 geführt, so, dass beispielsweise in Abhängigkeit von einer Regelabweichung der Generatorleistung oder der Drehzahl über diese Stellorgan der Brennstoffmassenstrom verringert oder erhöht wird.
Die Lanzen der Brenner 7 sind in der Figur noch mit einer weiteren Ringleitung 11 verbunden. Über diese Ringleitung wird den Brennern Wasser zugeführt. Die Wassermenge wird durch das Wassermengen-Stellorgan 10 eingestellt. Das Wassermengen-Stellorgan wird über eine Signalleitung 57 vom Kontrollmodul 50 gesteuert. Die Wassermenge kann über Düsen der Brenner unmittelbar in die Brenner eingedüst werden; andererseits kann das Wasser über Mischer mit Flüssigbrennstoff vermischt und die Brenner mit einer Wasser-in-Flüssigbrennstoff-Emulsion betrieben werden. Die Öffnungs- und Schliessanweisungen werden dabei in Abhängigkeit von aktuellen Betriebszuständen innerhalb des Kontrollmoduls generiert. Aus der Vielzahl gemessener und im Kontrollmodul zusammengeführter Grössen werden ausgewählte miteinander zu einer Leitgrösse für die einzuspritzende Wassermenge verrechnet. Dabei ist es im Rahmen der Erfindungsidee einerseits möglich, die Wassermenge einfach in Abhängigkeit von einer Leitgrösse in einer offenen Steuerkette zu steuern. Beispielsweise kann die Wassermenge einfach als Funktion der aktuellen relativen Leistung des Gasturbosatzes vorgegeben werden. Andererseits und vorteilhaft kann die Steuerung der Wassermenge in einem geschlossenen Regelkreis erfolgen, um Pulsationen oder Brennertemperaturen unterhalb eines zulässigen Höchstwertes zu halten. In einer weiteren Ausführungsform detektieren optische Sensoren die Lage der Verbrennungszone vor der Brenneröffnung. Die Wassereinspritzung kann dann benutzt werden, um die Flammenposition auf einen Sollwert einzuregeln.

Diese Aufzählung möglicher Betriebsmodi des erfindungsgemässen Verfahrens ist nicht abschliessend; der Fachmann ist in der Lage, ohne Weiteres eine Vielzahl von Varianten des erfindungsgemässen Verfahrens zu implementieren.

### Bezugszeichenliste

- 1: Gasturbosatz
- 2: Welle
- 3: Generator
- 4: Verdichter
- 5: Brennkammer
- 6: Turbine
- 7: Brenner
- 8: Ringleitung
- 9: Brennstoffmengen-Stellorgan
- 10: Wassermengen-Stellorgan
- 11: Ringleitung
- 41: verstellbare Vorleitreihe
- 50: Kontrollmodul
- 51, 52, 53, 54, 55: Messsignale, Signalleitungen
- 56, 57: Steuersignal, Signalleitung

## Patentansprüche

1. Verfahren zum Betrieb eines Vormischbrenners, wobei in Abhängigkeit von wenigstens einer aus wenigstens einer gemessenen Grösse ermittelten Leitgrösse und unabhängig von der Brennstoffmenge eine Wassermenge in die Reaktionszone des Brenners eingebracht wird, und bei einem trockenen Betrieb des Brenners die eingebrachte Wassermenge und beim nassen Betrieb des Brenners die verfahrensbedingte Variation der Wassermenge kleiner als 20% der dem Brenner zugeführten Brennstoffmenge ist.

2. Verfahren nach Anspruch 1, **dadurch gekennzeichnet, dass** die eingebrachte Wassermenge bzw. die verfahrensbedingte Variation der Wassermenge kleiner als 10%, insbesondere kleiner als 5% der dem Brenner zugeführten Brennstoffmenge ist.

3. Verfahren nach Anspruch 1 oder 2, **dadurch gekennzeichnet, dass** der Brenner mit Flüssigbrennstoff betrieben wird.

4. Verfahren nach einem der vorstehenden Ansprüche, **dadurch gekennzeichnet, dass** wenigstens eine gemessene Grösse Verbrennungspulsationen sind.

5. Verfahren nach einem der vorstehenden Ansprüche, **dadurch gekennzeichnet, dass** als Leitgrösse wenigstens ein Summenpegel von Verbrennungspulsationen herangezogen wird.

6. Verfahren nach einem der vorstehenden Ansprüche, **dadurch gekennzeichnet, dass** als Leitgrösse wenigstens eine Amplitude eines Frequenzspektrums von Verbrennungspulsationen herangezogen wird.

7. Verfahren nach einem der vorstehenden Ansprüche, **dadurch gekennzeichnet, dass** Verbrennungspulsationen innerhalb wenigstens eines bestimmten Frequenzbereiches zur Bildung der Leitgrösse herangezogen werden.

8. Verfahren nach einem der vorstehenden Ansprüche, **dadurch gekennzeichnet, dass** wenigstens eine gemessene Grösse wenigstens eine Temperatur ist.

9. Verfahren nach einem der vorstehenden Ansprüche, **dadurch gekennzeichnet, dass** wenigstens eine gemessene Grösse eine Materialtemperatur des Vormischbrenners ist.

10. Verfahren nach einem der vorstehenden Ansprüche, **dadurch gekennzeichnet, dass** wenigstens eine gemessene Grösse ein Signal eines optischen Sensors ist.

11. Verfahren nach einem der vorstehenden Ansprüche, **dadurch gekennzeichnet, dass** die Wassermenge über Düsen des Brenners eingebracht wird.

12. Verfahren nach einem der vorstehenden Ansprüche, **dadurch gekennzeichnet, dass** die Wassermenge vorgängig der Eindüsung eines Flüssigbrennstoffes einem Flüssigbrennstoff beigemischt wird, derart, dass der Brenner mit einer Wasser-in-Brennstoff-Emulsion betrieben wird.

## Claims

1. Method of operating a premix burner, a water quantity being introduced into the reaction zone of the burner as a function of at least one command variable, determined from at least one measured variable, and independently of the fuel quantity, and, during a dry operation of the burner, the introduced water quantity and, during wet operation of the burner, the process-specific variation in the water quantity being less than 20% of the fuel quantity fed to the burner.

2. Method according to Claim 1, **characterized in that** the introduced water quantity or the process-specific variation in the water quantity is less than 10%, in particular less than 5%, of the fuel quantity fed to the burner.

3. Method according to Claim 1 or 2, **characterized in that** the burner is operated with liquid fuel.

4. Method according to one of the preceding claims, **characterized in that** at least one measured variable is combustion pulsations.

5. Method according to one of the preceding claims, **characterized in that** at least one cumulative level of combustion pulsations is used as command variable.

6. Method according to one of the preceding claims, **characterized in that** at least one amplitude of a frequency spectrum of combustion pulsations is used as command variable.

7. Method according to one of the preceding claims, **characterized in that** combustion pulsations within at least a certain frequency range are used for forming the command variable.

8. Method according to one of the preceding claims, **characterized in that** at least one measured variable is at least one temperature.

9. Method according to one of the preceding claims, **characterized in that** at least one measured variable is a material temperature of the premix burner.

10. Method according to one of the preceding claims, **characterized in that** at least one measured variable is a signal from an optical sensor.

11. Method according to one of the preceding claims, **characterized in that** the water quantity is introduced via nozzles of the burner.

12. Method according to one of the preceding claims, **characterized in that** the water quantity is admixed to a liquid fuel prior to the spraying of a liquid fuel, in such a way that the burner is operated with a water-in-fuel emulsion.

## Revendications

1. Procédé pour faire fonctionner un brûleur à prémélange, dans lequel, en fonction d'au moins une valeur directrice détectée à partir d'au moins une valeur mesurée et indépendamment de la quantité de combustible, une quantité d'eau est introduite dans la zone de réaction du brûleur, et dans lequel, pour un fonctionnement à sec du brûleur, la quantité d'eau introduite est inférieure à 20% de la quantité de combustible acheminée au brûleur, et pour un fonctionnement humide du brûleur, la variation de la quantité d'eau, due au procédé, est inférieure à 20% de la quantité de combustible acheminée au brûleur.

2. Procédé selon la revendication 1, **caractérisé en ce que** la quantité d'eau introduite ou la variation de la quantité d'eau due au procédé est inférieure à 10%, notamment inférieure à 5% de la quantité de combustible acheminée au brûleur.

3. Procédé selon la revendication 1 ou 2, **caractérisé en ce que** le brûleur fonctionne avec du combustible fluide.

4. Procédé selon l'une quelconque des revendications précédentes, **caractérisé en ce qu'**au moins une valeur mesurée est représentée par les impulsions de combustion.

5. Procédé selon l'une quelconque des revendications précédentes, **caractérisé en ce qu'**on utilise comme valeur directrice au moins un niveau combiné d'impulsions de combustion.

6. Procédé selon l'une quelconque des revendications précédentes, **caractérisé en ce que** l'on utilise comme valeur directrice au moins une amplitude d'un spectre de fréquences d'impulsions de combustion.

7. Procédé selon l'une quelconque des revendications précédentes, **caractérisé en ce que** l'on utilise des impulsions de combustion dans au moins une plage de fréquences déterminée pour former la valeur directrice.

8. Procédé selon l'une quelconque des revendications précédentes, **caractérisé en ce qu'**au moins une valeur mesurée est au moins une température.

9. Procédé selon l'une quelconque des revendications précédentes, **caractérisé en ce qu'**au moins une valeur mesurée est la température du matériau du brûleur à prémélange.

10. Procédé selon l'une quelconque des revendications précédentes, **caractérisé en ce qu'**au moins une valeur mesurée est un signal d'un capteur optique.

11. Procédé selon l'une quelconque des revendications précédentes, **caractérisé en ce que** la quantité d'eau est introduite par le biais de buses du brûleur.

12. Procédé selon l'une quelconque des revendications précédentes, **caractérisé en ce que** la quantité d'eau est ajoutée préalablement à l'injection d'un combustible fluide dans la chambre de combustion à ce combustible fluide, de telle sorte que le brûleur fonctionne avec une émulsion eau dans combustible.
